# FASCICULE DE BREVET EUROPEEN

(11) **EP 1 571 454 B1**
(45) Date de publication et mention de la délivrance du brevet: **01.08.2007**
(21) Numéro de dépôt: 04100839.2
(22) Date de dépôt: 02.03.2004
(51) Int. Cl.: G01P 15/08, G01P 1/00

(54) **Microsystème électromécanique**
Mikroelektromechanisches System
Microelectromechanical system

(43) Date de publication de la demande: 07.09.2005
(73) Titulaire: Colibrys S.A., 2000 Neuchâtel (CH)
(72) Inventeur: Dutoit, Bertrand, 1446, Baulmes (CH); Birling, Sophie, 2000, Neuchâtel (CH); Stauffer, Jean-Michel, 2000, Neuchâtel (CH); Dupraz, Yves, 1442, Montagny-près-Yverdon (CH)
(74) Mandataire: P&TS Patents & Technology Surveys SA

(56) Documents cités:
- WO-A-03/023414
- US-A- 5 627 397
- US-A- 5 777 226
- US-A- 6 105 428
- US-A1- 2001 047 688
- PATENT ABSTRACTS OF JAPAN vol. 013, no. 430 (P-937), 26 septembre 1989 (1989-09-26) -& JP 01 163620 A (NISSAN MOTOR CO LTD), 27 juin 1989 (1989-06-27)

## Description

La présente invention concerne un microsystème électromécanique (MEMS, Micro Electro Mechanical System). La présente invention concerne en particulier un accéléromètre sous la forme d'un microsystème électromécanique.

Les microsystèmes électromécaniques ou MEMS sont des systèmes miniaturisés réalisés à partir des micro- et nanotechnologies issues de la micro-électronique. Ils intègrent généralement des éléments mécaniques et/ou électromécaniques formés par structuration d'une ou de plusieurs couches de substrat semiconducteur. Parmi les applications des MEMS figurent par exemple des accéléromètres, des commutateurs optiques, des micromoteurs, etc. La réalisation de MEMS permet une miniaturisation de ces composants ainsi qu'une intégration des éventuels circuits électroniques nécessaires à leur contrôle.

Un accéléromètre comprend généralement une masse d'inertie pouvant se déplacer selon au moins un axe et dont le déplacement, lorsque l'accéléromètre subit une accélération selon cet axe, induit la variation d'une grandeur physique, par exemple d'une valeur électrique. La mesure de cette variation permet alors de déterminer la valeur absolue et/ou le sens de l'accélération à laquelle est soumise l'accéléromètre et/ou l'élément auquel il est attaché.

Un accéléromètre capacitif comprend par exemple une masse d'inertie conductrice électriquement, placée en regard d'au moins une électrode de préférence fixe, sans être en contact avec elle. L'ensemble forme ainsi un condensateur dont les propriétés mécaniques et électriques, en particulier la capacité, varient en fonction des déplacements de la masse d'inertie.

Selon une méthode de mesure, les accélérations auxquelles est soumis l'accéléromètre sont déterminées par la mesure des variations de capacité induites par les déplacements de la masse d'inertie. On parle alors de mesure directe.

Selon une méthode équivalente, des forces électrostatiques sont appliquées sur la masse d'inertie et l'électrode, de manière à ce que la position relative de ces deux éléments reste stable. La mesure des variations de capacité sert alors de signal d'erreur pour réguler les forces appliquées, les variations de ces forces servant alors à la mesure des accélérations subies par la masse d'inertie.

Quelle que soit la méthode de mesure choisie, la précision de la mesure dépendra fortement de la stabilité mécanique de l'accéléromètre, en particulier de la géométrie de son ou ses électrodes et de la distance entre elles et la masse d'inertie au repos.

Les accéléromètres sont utilisés dans de nombreuses applications. D'une manière générale, ils peuvent être fixés à tout objet dont on veut mesurer les accélérations. Pour certaines applications, la taille de l'accéléromètre est un élément essentiel, cette dernière étant souvent de préférence la plus petite possible afin de permettre une intégration optimale de l'accéléromètre. La masse de l'accéléromètre est également de préférence minimale afin de minimiser son influence sur l'objet de la mesure.

Certains accéléromètres particulièrement petits et légers sont des MEMS formés généralement par structuration de plusieurs couches distinctes et superposées d'un matériau semiconducteur, par exemple de silicium. Cette construction permet la fabrication d'accéléromètres miniaturisés dont les plus grandes dimensions ne dépassent pas quelques millimètres.

Des accéléromètres sont décrits notamment dans les documents US-A-6105428, US-A-5627397, JP-A-01163620, US-A-5777226 et WO-A-0303414. Dans l'ensemble de ces documents, les déplacements de la masse d'inertie sont limités par des butées ou d'autres éléments qui permettent d'empêcher les déformations ou les ruptures de la zone de liaison élastique entre la masse d'inertie et le cadre de l'accéléromètre.

Cependant, l'écartement entre la masse d'inertie et la ou les électrodes de tels accéléromètres étant également très petit, ces derniers sont particulièrement sensibles aux déformations mécaniques, même très faibles. C'est pourquoi il est essentiel que leur partie active, c'est à dire la partie comprenant la masse d'inertie et la ou les électrodes, soit mécaniquement aussi stable que possible. Or les contraintes pratiquement inévitables exercées sur un tel accéléromètre par sa fixation sur un support, en particulier les éventuelles torsions ou flexions dues à des irrégularités des forces d'adhésion ou de la surface du support, sont souvent suffisantes pour provoquer des déformations de la partie active induisant des erreurs de mesure sensibles, par exemple à cause de la déformation des électrodes.

La demande internationale WO00/79287 et le brevet US6634231 décrivent par exemple des solutions permettant d'isoler au moins partiellement la partie active de l'accéléromètre des contraintes mécaniques exercées sur ses éléments de fixation. Selon ces solutions, l'accéléromètre est fixé uniquement par un cadre rigide auquel la partie active est reliée par des attaches possédant une certaine souplesse. Les contraintes mécaniques exercées sur le cadre sont ainsi absorbées par les attaches au lieu d'être répercutées sur la partie active.

Une solution similaire est décrite dans US-A1-2001047688.

Un désavantage majeur de ces constructions est que leur résistance mécanique est limitée par la résistance des attaches. En effet, au-delà d'une certaine accélération, le déplacement de la partie active par rapport au cadre rigide provoquera une déformation irréversible, voire une rupture des attaches, et donc la destruction de l'accéléromètre.

De tels accéléromètres ne peuvent par conséquent pas être soumis à des accélérations importantes sans risquer d'être endommagés de manière irréversible. Ils sont ainsi particulièrement sensibles aux chocs et ne peuvent pas être utilisés dans certaines applications comme par exemple en balistique où les accélérations peuvent atteindre momentanément plusieurs dizaines de milliers de fois l'accélération g due à l'attraction terrestre.

Un but de l'invention est donc de proposer un accéléromètre de faible dimension permettant des mesures fiables et précises.

Un autre but de l'invention est de proposer un accéléromètre présentant une résistance mécanique maximale aux fortes accélérations.

Ces buts sont atteints par un accéléromètre possédant les caractéristiques de la revendication indépendante, des variantes avantageuses étant en outre données par les revendications dépendantes et par la description.

Ces buts sont atteints en particulier par un microsystème électromécanique (MEMS) comprenant
- une partie active comprenant un dispositif électromécanique,
- au moins un socle pour la fixation du microsystème sur un support,
- au moins une attache attachant la partie active au socle et permettant un déplacement de la partie active relativement au socle le long d'un axe sensiblement perpendiculaire au plan du support lorsque le microsystème est fixé sur le support,
- des éléments de butée pour limiter l'amplitude des déplacements de la partie active relativement au socle le long de l'axe perpendiculaire.

La partie active pouvant se déplacer par rapport au socle auquel elle est attachée, elle est isolée de toute contrainte mécanique que pourrait subir le socle, en particulier des torsions et/ou des flexions dues à sa fixation sur un support. D'autre part, les mouvements de la partie active étant limités par des éléments de butée, il peut être garanti grâce à l'invention que la ou les attaches ne seront pas étendues au-delà de leur domaine d'élasticité, évitant ainsi leur déformation irréversible et/ou leur rupture.

La présente invention sera mieux comprise à l'aide de la description de variantes préférentielles illustrées par les figures 1 à 4 montrant:
La figure 1 une vue éclatée et schématique d'un accéléromètre selon une version préférentielle de l'invention.
La figure 2 un accéléromètre selon une version préférentielle de l'invention, fixé sur un support.
La figure 3 une vue éclatée et schématique d'un accéléromètre selon une autre version de l'invention.
La figure 4 un accéléromètre selon une autre version de l'invention, fixé sur un support.

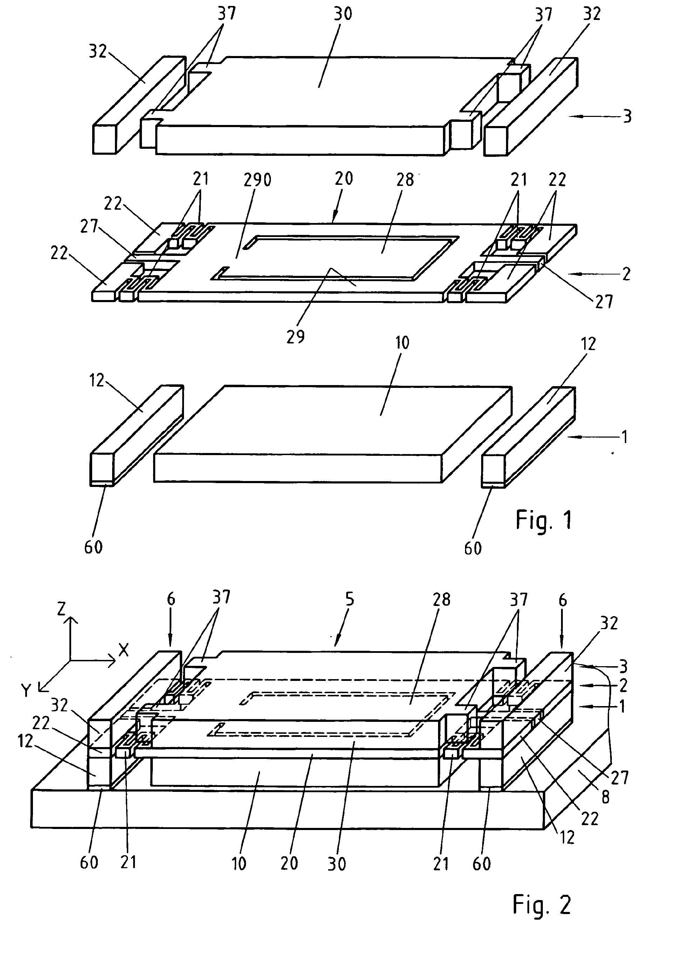

Selon une version préférentielle illustrée par les figures 1 et 2, le microsystème électromécanique (MEMS, Micro Electro Mechanical System) de l'invention est un accéléromètre comprenant trois couches distinctes 1, 2, 3 d'un matériau semi-conducteur, par exemple de silicium. Les trois couches 1, 2, 3 sont de préférence isolées électriquement entre elles par des couches isolantes non représentées recouvrant au moins partiellement leurs faces contiguës et contribuant à leur liaison mécanique entre elles. Ces couches isolantes sont formées par exemple par oxydation de la surface de la couche de silicium correspondante et peuvent être structurées selon les besoins par des techniques connues, par exemple de photolithogravure.

Pour des raisons de simplification, seules les structurations des couches semiconductrices 1, 2, 3 sont représentées sur les figures 1 et 2.

La couche inférieure 1 et la couche supérieure 3 sont structurées, par exemple par photolithogravure, de manière à former une partie centrale 10, resp. 30 et des éléments de socle 12 resp. 32 distincts les uns des autres, de préférence complètement séparés mécaniquement. Sur les parties centrales 10 resp. 30 des couches inférieure 1 et supérieure 3 sont formées des électrodes non représentées. Ces électrodes sont formées par exemple par implantation locale du matériau semiconducteur et sont destinées à être placées, dans l'accéléromètre assemblé, en regard de la masse d'inertie 28.

La couche supérieure 3 comporte en outre sur sa partie centrale 30 des butées 37 dont le rôle sera décrit plus bas. Ces butées 37 sont de préférence constituées de parties saillantes formées sur les faces de la partie centrale 30 vis-à-vis des éléments de socle 32. La longueur de ces butées 37 est de préférence sensiblement plus courte que la longueur des faces de la partie centrale 30 sur lesquelles elles sont formées. Selon une variante non représentée de l'invention, la partie centrale ne comprend qu'une seule butée sur chaque face orientée vis-à-vis des éléments de socle 32. La longueur de ces butées peut alors être identique à la longueur de la face elle-même.

La couche intermédiaire 2 est structurée, par exemple par photolithogravure, de manière à former une partie centrale 20 aux dimensions de préférence sensiblement égales aux dimensions des parties centrales 10, resp. 30 des couches inférieure 1 et supérieure 3. La couche intermédiaire 2 comprend également des éléments de socle 22 destinés à être assemblés aux éléments de socle 12, 32 correspondants des autres couches. La partie centrale 20 de la couche intermédiaire 2 est structurée de manière à former une masse d'inertie 28 entourée de préférence d'un cadre 29 auquel elle est reliée par au moins une zone flexible 290 lui permettant de se déplacer selon au moins un axe par rapport à ce dernier.

La partie centrale 20 est reliée aux éléments de socle 22 par des attaches 21 également structurées dans la couche intermédiaire 2. Dans l'exemple illustré par les figures, la partie centrale 20 est rectangulaire et une attache 21 relie chacun de ses angles à l'élément de socle 22 le plus proche. L'homme du métier comprendra cependant que d'autres dispositions des attaches et/ou un nombre différent d'attaches est parfaitement envisageable dans le cadre de l'invention.

Les attaches 21 possèdent une certaine élasticité permettant un déplacement de la partie centrale 20 par rapport aux éléments de socle 22 sans que cela n'entraîne leur déformation irréversible. La forme des attaches 21 est de préférence choisie de manière à présenter les caractéristiques mécaniques voulues, en particulier l'élasticité recherchée selon le ou les axes de déplacement possibles de la partie centrale 20, tout en étant aussi compactes que possible.

Selon une version préférentielle, les attaches 21 permettent, dans leur domaine d'élasticité, un déplacement de la partie centrale 20 par rapport aux éléments de socle 22 le long de trois axes X, Y, Z linéairement indépendants. De préférence, les attaches 21 permettent également une rotation de la partie centrale 20 par rapport aux éléments de socle 22 autour de ces trois axes X, Y, Z sans impliquer leur déformation irréversible. La partie centrale 20 est ainsi entièrement découplée des contraintes, en particulier d'éventuelles torsions ou flexions, pouvant être exercées sur les éléments de socle 22. Ainsi qu'expliqué plus loin, les attaches 21 sont de préférence structurées de manière à offrir une élasticité maximale selon un axe X sensiblement parallèle au plan du support 8 lorsque l'accéléromètre y est fixé et une élasticité réduite selon les axes Y et Z.

Dans l'accéléromètre assemblé, représenté à la figure 2, la masse d'inertie 28 est suspendue entre les deux électrodes par la zone flexible la reliant au cadre l'entourant. Chaque électrode forme ainsi, avec la masse d'inertie, un condensateur dont la capacité dépend de la surface de la masse d'inertie, de la surface de l'électrode correspondante, de la distance séparant ces deux éléments et de la constante diélectrique de la matière, en général de l'air, se trouvant entre eux. Lorsque l'accéléromètre est soumis à une accélération dans une direction Z sensiblement perpendiculaire au plan du support 8, la masse d'inertie se déplace en direction de l'une ou l'autre des électrodes suivant le sens de l'accélération, entraînant une variation des capacités de ces condensateurs. La mesure de cette variation, ou des forces électrostatiques nécessaires à contrer cette variation, permet alors de déterminer l'intensité et le sens de l'accélération.

Dans l'exemple illustré, l'axe de mesure de l'accéléromètre correspond à un axe Z sensiblement perpendiculaire au plan du support 8. L'homme du métier comprendra cependant qu'il est parfaitement envisageable, dans le cadre de l'invention, de former la masse d'inertie et la ou les électrodes afin d'obtenir un accéléromètre possédant un autre axe de mesure, par exemple un axe de mesure correspondant à un axe X ou Y sensiblement parallèle au plan du support 8, ou encore un accéléromètre possédant deux ou trois axes de mesure X, Y ou Z linéairement indépendants.

Selon une variante préférentielle, les deux électrodes ont la même surface et la même disposition face à la masse d'inertie 28, et cette dernière est suspendue à égale distance de chaque électrode lorsqu'elle n'est soumise à aucune accélération. De cette manière, la matière entre chaque électrode et la masse d'inertie 28 étant identique, les capacités des deux condensateurs sont identiques lorsque l'accéléromètre est au repos, c'est à dire lorsqu'il ne subit aucune accélération. Il apparaîtra cependant clairement à l'homme du métier que d'autres configurations sont possibles dans le cadre de l'invention. Les capacités des deux condensateurs peuvent par exemple être différentes, leurs valeurs respectives lorsque l'accéléromètre est au repos étant par exemple mesurées au cours d'une procédure de calibrage.

Les parties centrales 10, 20 resp. 30 des couches inférieure 1, intermédiaire 2 et supérieure 3 forment la partie active 5 de l'accéléromètre qui comprend la masse d'inertie 28 et les deux électrodes. Les éléments de socle 12, 22 resp. 32 de ces mêmes couches forment les socles 6 de l'accéléromètre par lesquels il est fixé au support 8.

Selon une version préférentielle de l'invention, deux éléments rigides 27 solidaires de la partie centrale 5 de l'accéléromètre et dont la fonction est expliquée plus bas s'étendent jusqu'aux socles 6. Selon l'exemple illustré par les figures 1 et 2, ces éléments rigides sont des poutres 27 formées sur la couche intermédiaire 2 et solidaires du cadre 29, qui sont insérées dans des cavités formées dans les socles 6. Chaque poutre 27 s'étend entre deux éléments de socle 22 de la couche intermédiaire 2 qui forme, avec les éléments de socle 12 et 32 correspondants des couches inférieure 1 et supérieure 3, un des deux socles 6. L'espace entre l'extrémité de la poutre 27 et les éléments de socle 22 est fermé sur deux côtés par les éléments de socle 12 et 32, formant ainsi dans le socle 6 une cavité dans laquelle est partiellement logée la poutre 27. La section de chaque cavité est plus grande que la section de la poutre 27 correspondante de manière à permettre à cette dernière un certain mouvement dans sa cavité, au moins le long d'un axe X sensiblement parallèle au plan du support 8.

La couche intermédiaire 2 est de préférence formée sur la couche inférieure 1 au moyen de la technologie SOI (Silicon On Insulator). Selon cette technologie, une couche semiconductrice, de préférence de faible épaisseur, est déposée sur le substrat structuré et au moins partiellement recouvert d'une couche isolante non représentée formant la couche inférieure 1. Après dépôt, cette couche de silicium est à son tour structurée afin d'y former les éléments désirés, par exemple la masse d'inertie 28, les éléments de socle 22, les attaches 21 et les poutres 27.

La technologie SOI permet la déposition et la structuration de couches de silicium sensiblement plus fines que les substrats habituels, permettant ainsi d'une part de minimiser l'épaisseur des composants semiconducteurs multicouches et d'autre part de former sur la couche plus fine des micro-éléments mécaniques aux dimensions réduites et offrant des propriétés mécaniques particulières, irréalisables sur des couches plus épaisses.

La couche supérieure 3 est de préférence structurée séparément puis fixée en des zones déterminées sur la couche intermédiaire 2. Selon une variante, la couche supérieure 3 est soudée sur la couche intermédiaire 2, par exemple à l'aide de la technologie SFB (Silicon Fusion Bonding). Les zones auxquelles les deux couches 2 et 3 sont fixées l'une à l'autre sont essentiellement réparties sur les éléments de socle 22 et 32 et sur le cadre 29 entourant la masse d'inertie 28. Les butées 37 ne sont pas fixées sur la couche intermédiaire 2 de manière à permettre leur mouvement relatif par rapport aux attaches 21 qu'elles recouvrent partiellement.

Les couches inférieure 1 et intermédiaire 2 d'une part, ainsi que la couche supérieure 3 d'autre part, sont de préférence formées à partir de plaquettes semiconductrices, par exemple en silicium, permettant la formation simultanée des éléments de plusieurs centaines, voire de quelques milliers d'accéléromètres généralement identiques, selon des techniques bien connues du domaine de la fabrication des puces électroniques. Les plaquettes sont alors assemblées, par exemple soudées à l'aide de la technologie SFB, de manière à former simultanément une pluralité d'accéléromètres qui sont ensuite extraits individuellement des plaquettes.

Selon une variante de l'invention non représentée, un circuit électronique pour la mesure des variations des capacités de l'accéléromètre et éventuellement l'interprétation de ces mesures est également formé sur les couches inférieure, intermédiaire et/ou supérieure. Le circuit électronique comprend alors une pluralité de composants semiconducteurs disposés par exemple sur une partie spécifique de la partie active et/ou sur une partie directement liée aux éléments de socle.

Selon une version préférentielle de l'invention illustrée par les figures 1 et 2, l'accéléromètre comprend deux socles 6 par lesquels il peut être fixé sur un support 8. Les socles 6 sont de préférence fixés sur le support 8 au moyen d'une matière adhésive 60, par exemple de la colle adaptée aux matériaux de l'accéléromètre et du support, permettant une fixation suffisante pour que l'accéléromètre ne se détache pas lorsque le support 8 est soumis à de fortes accélérations. La fixation de l'accéléromètre sur le support 8 est par exemple suffisante pour résister à des accélérations dont la valeur absolue est supérieure à plusieurs dizaines de milliers de g.

Selon une variante préférentielle, le support 8 est un circuit imprimé ou un support céramique comprenant par exemple un circuit électronique non représenté relié électriquement aux électrodes de l'accéléromètre. Le circuit électronique permet par exemple la mesure des variations des capacités des condensateurs de l'accéléromètre, la conversion de ces mesures en un signal digital et éventuellement leur interprétation. Selon une variante, le circuit électronique permet également la génération de forces électrostatiques pour réguler la position de la masse d'inertie lorsque l'accéléromètre subit une accélération.

L'accéléromètre de l'invention et le support 8 forment ainsi un dispositif pouvant être attaché à tout objet dont l'accélération doit être mesurée. Ce dispositif délivre de préférence directement un signal électrique analogique et/ou digital correspondant à la valeur et/ou au sens de l'accélération subie par le dispositif le long de l'axe de mesure, et donc également par l'objet auquel il est attaché.

Selon une variante, le circuit électronique comprend en outre un circuit intégré permettant le traitement des valeurs électriques mesurées par l'accéléromètre. Le circuit intégré reçoit par exemple un signal d'horloge permettant la mesure à des instants déterminés, par exemple à intervalles réguliers, de l'accélération subie par le dispositif. Le circuit intégré effectue ensuite par exemple des fonctions d'interpolation et/ou d'extrapolation afin de déterminer l'accélération subie par le dispositif en fonction du temps, dans le but par exemple d'une représentation graphique de cette accélération sur l'affichage d'un calculateur relié au dispositif. Le circuit intégré permet aussi de déterminer par exemple l'accélération maximale subie par le dispositif et/ou l'instant auquel cette accélération a été mesurée. Le circuit électronique comprend également de préférence une zone de mémoire permettant le stockage permanent ou temporaire des valeurs mesurées et/ou des fonctions calculées par le circuit intégré, par exemple en vue de la récupération et/ou représentation ultérieure de ces données.

La partie active 5 de l'accéléromètre est reliée aux socles 6 par les attaches 21. Elle n'est pas fixée directement sur le support 8 dont elle est séparée par un espace correspondant de préférence sensiblement à l'épaisseur de la matière adhésive 60. Tout couplage mécanique direct du support 8 et de la partie active 5 est ainsi évité. Lorsque l'accéléromètre est fixé au support 8, la partie active 5 est suspendue entre les socles 6 par les attaches 21. Elle peut alors, dans certaines limites expliquées plus bas, se déplacer par rapport aux supports 6 le long des trois axes X, Y et Z linéairement indépendants. La partie active 5 peut également de préférence effectuer des rotations par rapport aux supports 6 autour de ces trois axes X, Y, Z.

La partie active 5 constitue ainsi une partie mécaniquement stable et pratiquement libre de toute contrainte mécanique extérieure, en particulier de toute contrainte exercée sur les socles 6 lors leur fixation sur le support 8 et/ou à cause de contraintes, par exemple de torsions et/ou de flexions, exercées ultérieurement sur le support 8, par exemple lors de sa fixation sur l'objet dont l'accélération doit être mesurée. Grâce à leur élasticité, les attaches 21 garantissent une bonne isolation de la partie active 5 en absorbant ces contraintes mécaniques induites sur les socles 6 et évitent ainsi une déformation mécanique de la partie active 5 qui risquerait de modifier la géométrie des électrodes, et par conséquent de fausser la mesure. L'accéléromètre de l'invention permet ainsi de garantir une mesure fiable et précise, quelles que soient l'intensité et la direction des forces d'adhésion maintenant l'accéléromètre sur le support 8 et/ou des torsions ou flexions subies ultérieurement par le support 8.

Ainsi qu'évoqué précédemment, les attaches 21 sont de préférence formées de manière à offrir une élasticité maximale dans la direction de l'axe X sensiblement parallèle au plan du support 8 et le long duquel sont alignés la partie active 5 et les supports 6. En effet, cette élasticité permet en particulier une large compensation d'éventuelles imprécisions dans l'écartement des socles 6 lors de la fixation de l'accéléromètre sur le support 8.

Les butées 37, formées par exemple sur la partie centrale 30 de la couche supérieure 3, coopèrent de préférence avec les socles 6 pour limiter l'amplitude des déplacements de l'accéléromètre selon cet axe X, afin qu'en cas d'accélération selon cette direction les attaches 21 ne soient en aucun cas étirées au-delà de leur domaine d'élasticité. De préférence, les butées 37 sont constituées de portions saillantes de longueur limitée formées sur les faces latérales de la partie active 5 se trouvant face aux socles 6. Les déplacements de la partie centrale 5 le long de l'axe X sont ainsi limités par la distance entre les butées 37 et la partie supérieure 32 des socles 6, cette distance étant déterminée de sorte à éviter toute déformation irréversible et/ou rupture des attaches 21.

Dans l'exemple illustré, les butées 37 sont formés dans la partie centrale 30 de la couche supérieure 3. L'homme du métier comprendra cependant que ces butées peuvent également être formées sur d'autres parties de la couche supérieure 3, par exemple sur l'élément de socle 32 correspondant, ou sur une autre couche, par exemple sur la couche inférieure 1 ou intermédiaire 2. Il est également parfaitement envisageable, dans le cadre de l'invention, de prévoir d'autres éléments mécaniques indépendants des socles 6 destinés à limiter la course des butées 37, et donc de la partie active 5, le long de l'axe X. Toute combinaison des solutions évoquées ci-dessus est en outre également possible.

Selon la variante préférentielle de l'invention illustrée par les figures 1 et 2, les attaches 21 présentent également une certaine élasticité dans la direction d'un axe Y sensiblement parallèle au plan du support 8 et perpendiculaire à l'axe X afin, entre autres, de compenser une éventuelle imprécision dans l'alignement des socles 6 lors de leur fixation au support 8.

Dans la direction de l'axe Z perpendiculaire au plan du support 8, l'élasticité des attaches 21 est en revanche de préférence minimale afin de maintenir la partie active 5 suspendue entre les socles 6 lorsque l'accéléromètre est au repos, en particulier afin d'éviter qu'elle ne soit en contact direct avec le socle 8 et de préférence afin d'éviter également que les poutres 27 ne soient en butée contre une des parois intérieures de leur cavité respective, quelle que soit l'orientation du dispositif.

De plus, l'axe Z correspondant dans cette variante de l'invention également à l'axe de mesure de l'accéléromètre, il est avantageux que les déplacements de la partie active 5 par rapport aux socle 6 et au support 8 le long de cet axe Z ne soient pas trop importants afin qu'ils n'influencent pas la mesure de manière significative.

Selon la variante préférentielle de l'invention décrite ici à titre d'exemple, les déplacements de la partie active 5 par rapport aux socles 6 le long des axes Y et Z sont limités par les poutres 27 solidaires de la partie active 5 et coopérant avec les cavités formées les socles 6. De préférence, les poutres 27 s'étendent dans la direction de l'axe X, axe dans lequel les mouvements de la partie active 5 sont limités par les butées 37 décrites plus haut. Les dimensions des sections des cavités sont plus grandes que les dimensions des sections des poutres 27, de sorte que ces dernières peuvent se déplacer librement dans leur cavité respective le long de l'axe X. Les déplacements des poutres 27 le long des axes Y et Z sont en revanche limités par l'espace entre les parois extérieures des poutres 27 et les parois intérieures des cavités. Les poutres 27 étant solidaires de la partie active 5 de l'accéléromètre, l'amplitude des déplacements de cette dernière sont également limités le long de ces deux axes. L'espace entre les parois extérieures des poutres 27 et les parois intérieures des cavités est déterminé de sorte que, lorsque le dispositif est soumis à une accélération selon l'axe Y et/ou Z, le déplacement de la partie active 5 par rapport aux socles 6 le long d'un de ces axes ne puisse pas étendre les attaches 21 au-delà de leur limite d'élasticité, évitant ainsi leur déformation irréversible et/ou leur rupture.

L'élasticité des attaches 21 déterminée par leur géométrie particulière permet également une rotation de la partie active 5 par rapport aux socles 6 autour des axes X, Y et/ou Z, contribuant ainsi à une isolation optimale de la partie active des contraintes mécaniques pouvant être exercées sur les socles 6. L'amplitude de ces rotations est toutefois limitée afin d'éviter toute déformation irréversible et/ou rupture des attaches 21.

De préférence, les sections des poutres 27 et des cavités sont ainsi d'une forme géométrique ne présentant pas d'axe de rotation, par exemple rectangulaires, triangulaires, trapézoïdales, etc., de manière à limiter la rotation des poutres 27 dans leur cavité, limitant ainsi la rotation de la partie active 5 par rapport aux socles 6 autour de l'axe X. De préférence, les poutres 27 sont en outre logées dans leur cavité sur une longueur suffisante pour limiter également la rotation de la partie active 5 selon l'axe Z et/ou Y à l'intérieur des limites voulues.

L'amplitude des mouvements de la partie centrale 5 par rapport aux socles 6 le long et/ou autour de tout axe est ainsi strictement limitée par les éléments de butée, d'une part par les butées 37 coopérant avec les supports 6 et d'autre part par les poutres 27 coopérant avec les cavités formées dans les socles 6. De préférence, l'amplitude maximale de ces déplacements est déterminée de sorte que, lorsque l'accéléromètre est fixé sur un support 8, la partie active 5 ne puisse étirer les attaches 21 élastiques au-delà de leur limite d'élasticité, évitant ainsi toute déformation irréversible et/ou rupture de ces dernières, même dans des conditions d'utilisation extrême.

La partie active 5 suspendue entre les socles 6 par les attaches 21 peut ainsi, sous l'effet d'une force extérieure, se déplacer par rapport au support 8 grâce à l'élasticité des attaches 21. Toutefois, après un déplacement déterminé, la partie active est bloquée dans au moins une direction afin que les attaches 21 ne soient étirées au-delà de leur domaine d'élasticité. Il est ainsi assuré, grâce au dispositif de l'invention, que même dans des conditions extrêmes les éléments de fixation 21 ne seront soumis, en fonctionnement normal, à aucune contrainte mécanique pouvant entraîner leur déformation irréversible et/ou leur rupture.

L'amplitude maximale des déplacements de la partie active 5 par rapport aux support 6 est déterminée en particulier par les dimensions des butées 37 d'une part et par les dimensions relatives des poutres 27 et des cavités correspondantes dans les socles 6 d'autre part.

Dans l'exemple décrit ci-dessus, les poutres 27 solidaires de la partie active 5 sont formées par structuration de la couche intermédiaire 2. L'homme du métier comprendra cependant que d'autres formes de réalisation sont également envisageables dans le cadre de l'invention. Les poutres peuvent par exemple être formées sur la couche inférieure 1 ou supérieure 3. Dans ce dernier cas, les poutres sont de préférence maintenues au moins partiellement dans la direction de l'axe perpendiculaire Z par la déposition ou la soudure d'une couche supplémentaire sur au moins une partie de la couche supérieure 3.

Il est également envisageable, dans le cadre de l'invention, de former une poutre ou tout autre élément rigide de sorte qu'il soit solidaire par exemple d'un des socles et qu'il s'insère dans une cavité prévue à cet effet dans la partie active. Il est également possible de limiter l'amplitude des déplacements de la partie active par rapport aux socles par la combinaison d'un élément rigide solidaire de la partie active coopérant avec une cavité formée dans un socle de l'accéléromètre et d'un élément rigide solidaire d'un socle et coopérant avec une cavité formée dans la partie active.

Dans l'exemple décrit ci-dessus, l'accéléromètre comprend deux poutres 27 limitant les mouvements de la partie active 5 par rapport aux socles 6 le long et autour de plusieurs axes X, Y, Z. Il serait cependant envisageable, dans le cadre de l'invention, de ne former qu'un seul élément rigide.

Il est également envisageable de former plus de deux éléments rigides par structuration d'une ou de plusieurs couches de matériau semiconducteur. Selon une variante, tous les éléments rigides ainsi formés ont alors sensiblement la même fonction et coopèrent avec des cavités similaires afin de limiter les mouvements de la partie active le long et/ou autour des mêmes axes. Selon une autre variante, chaque élément rigide possède une forme et/ou une orientation différente et/ou coopère avec une cavité formée différemment afin de limiter les mouvements de la partie active le long et/ou autour d'un ou de plusieurs axes différents.

Selon une variante, les éléments rigides coopérant avec leur cavité respective permettent de limiter les déplacements et rotations de la partie active le long et autour des trois axes X, Y, Z linéairement indépendants. Selon cette variante, les butées 37 sont par exemple remplacées par des cavités borgnes limitant l'amplitude des mouvements le long de l'axe X de la poutres correspondante. Selon une autre variante, la section de chaque poutre varie sur sa longueur de sorte que seule une longueur déterminée peut être insérée dans la cavité, limitant ainsi également l'amplitude des déplacements de chaque poutre dans sa cavité le long de l'axe X.

La masse d'inertie 28 de l'accéléromètre décrit ci-dessus dans une version préférentielle de l'invention se déplace entre les électrodes de la partie active selon une direction parallèle à l'axe Z. L'accéléromètre permet donc la mesure d'accélérations s'exerçant dans la direction de l'axe Z. Grâce à la limitation des déplacements le long de cet axe de mesure de la partie active 5 par rapport aux socles 6 à l'aide des éléments de butées décrits plus haut, l'accéléromètre de l'invention permet en particulier d'éviter que les attaches 21 ne soient endommagées par les accélérations, même très fortes, que l'accéléromètre doit mesurer et/ou par des accélérations allant au-delà de la plage de mesure de l'accéléromètre.

Selon une application, l'accéléromètre de l'invention est par exemple attaché à un projectile afin de mesurer les accélérations subies par ce dernier au cours de son vol. La valeur absolue de ces accélérations se situe habituellement entre quelques g et quelques centaines de g, par exemple entre 2 g et 100 g. La partie active 5 de l'accéléromètre de l'invention, en particulier la masse d'inertie 28 et la partie flexible 290, est alors de préférence dimensionnée de manière à pouvoir mesurer avec précision des accélérations à l'intérieur de cette plage.

Au moment du tir, le projectile subit cependant des accélérations pouvant aller jusqu'à quelques dizaines de milliers de g, par exemple plus de 20'000 g. Grâce à la limitation des mouvements de la partie active 5 par rapport aux socles 6 de préférence le long de tous les axes et en particulier le long de l'axe de mesure, l'accéléromètre de l'invention attaché au projectile est capable de résister à de telles accélérations sans être endommagé. Lors du tir, les poutres 27 et/ou les butées 37 sont ainsi en butée contre une paroi des cavités, respectivement contre un des socles 6, évitant ainsi que les attaches 21 ne soient déformées de manière irréversibles ou rompues. Après le tir, lorsque l'accélération du projectile se situe à nouveau dans la plage de mesure de l'accéléromètre, la partie active 5 est de préférence à nouveau librement suspendue aux socles 6 par les attaches 21 sans que les dispositifs de butée 37 et/ou 27 ne soient en butée et la partie active 5 reprend la mesure des accélérations subies le long de l'axe Z.

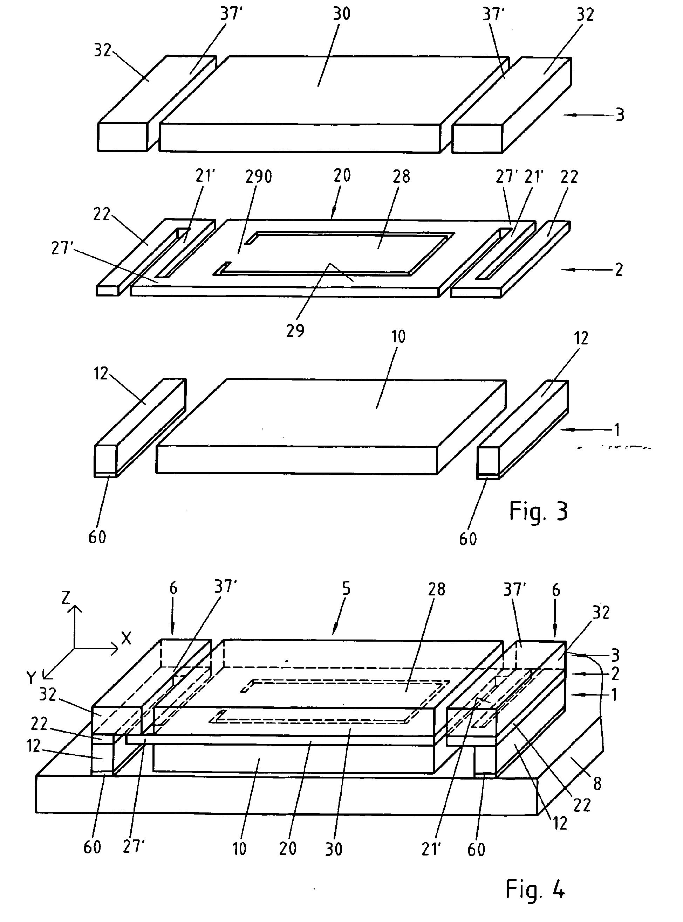

Une autre variante d'exécution de l'accéléromètre de l'invention est illustrée par les figures 3 et 4. Sans indication contraire, les mêmes références désignent les mêmes éléments sur toutes les figures 1 à 4.

Selon cette variante, la partie active 5 est liée à chacun des deux socles 6 par une attache 21'. Les éléments de butées limitant les mouvements de la partie active 5 le long de l'axe X sont des butées 37' formées sur les éléments de socle 32 de la couche supérieure 3. Chaque élément de socle 32 comporte une butée 37' disposée vis-à-vis de la partie active 5 et saillante par rapport aux autres éléments de socles 12 et 22 des autres couches. Chaque butée 37' recouvre au moins partiellement une attache 21'.

Selon cette variante d'exécution, les mouvements de la partie active 5 le long de l'axe Z sont limités, dans un sens au moins, par les butées 37' collaborant avec les parties rigides 27' par lesquelles les attaches 21' sont reliées à la partie active 5, en partie au cadre 29. Ces parties rigides 27' forment en effet des poutres solidaires du cadre 29, et donc de la partie active 5, dont la course le long de l'axe Z est limitée, dans un sens, par leur appui contre les butées 37'. Dans l'autre sens, les mouvements de la partie active 5 sont limités par son appui contre la surface supérieure du support 8. L'amplitude des déplacements de la partie active 5 relativement aux socles 6 le long de l'axe perpendiculaire Z sont ainsi limités par des éléments de butée comprenant les parties rigides 27' solidaires de la partie active 5 et collaborant avec les butées 37'. Dans l'autre sens, ces mouvements sont limités par la surface du support 8 sur lequel est fixé l'accéléromètre. Il est cependant possible d'imaginer, pour remplir cette fonction, de former sur les éléments de socles 12 de la couche inférieure 1 des butées similaires aux butées 37'. Les butées de chaque socle constituent alors une cavité allongée et ouverte dans laquelle est insérée une partie rigide 27' solidaires de la partie active 5.

Selon la variante d'exécution illustrée par les figures 3 et 4, l'amplitude des mouvements de la partie active 5 par rapport aux socles 6 le long de l'axe Y n'est pas limitée par des éléments de butées. Les attaches 21' sont cependant formées de telle manière que leur rigidité est suffisante pour résister à de fortes accélérations dans cette direction sans subir de dommages irréversibles.

Selon cette variante également, les mouvements de rotation de la partie active par rapport aux socles 6 sont limités par les éléments de butée 37', 27' et par la surface supérieure du socle 8.

Selon les variantes d'exécution décrites ci-dessus, les mouvements de l'accéléromètre selon un axe Z perpendiculaire au support 8 sont limités par des éléments rigides 27, 27' solidaires de la partie active 5 et coopérant au moins partiellement avec les socles 6. Il est toutefois envisageable, dans le cadre de l'invention, de limiter les mouvements de la partie active par un dispositif externe, en particulier, mais pas uniquement, dans une direction perpendiculaire au plan du support 8. Ce dispositif externe est par exemple un casque fixé sur le support 8 et enveloppant au moins partiellement l'accéléromètre. Le profil intérieur du casque coopère par exemple avec des butées formées sur la partie active de l'accéléromètre afin de limiter l'amplitude des mouvements de cette dernière.

Selon les variantes d'exécution décrites plus haut à titre d'exemple et illustrées par les figures, l'accéléromètre comprend deux socles 6 disposés de part et d'autre de sa partie active 5 pour sa fixation sur un support 8. Cette disposition des socles 6 permet la réalisation d'accéléromètres extrêmement compacts. L'homme du métier comprendra cependant que, dans le cadre de l'invention, les couches semiconductrices formant l'accéléromètre peuvent être structurées de manière à former un nombre différent de socles, ou à former des socles de forme et disposition différentes. La partie active peut ainsi être par exemple suspendue à un cadre l'entourant entièrement ou sur trois de ses côtés seulement, etc. Il serait également envisageable, dans le cadre de l'invention, d'imaginer des structures comprenant plusieurs parties actives comprenant par exemple chacune un accéléromètre et suspendues à des socles ou à un cadre communs.

L'invention est décrite ci-dessus pour le cas particulier d'un accéléromètre dont la partie active 5 doit être isolée de toute contrainte mécanique exercée sur d'autres parties de l'accéléromètre, en particulier sur ses socles 6 lors et/ou après sa fixation. L'homme du métier comprendra cependant que la présente invention est également applicable à tout autre composant, en particulier à tout autre MEMS dont une partie sensible, généralement une partie active électromécanique, doit être isolée de toute contrainte mécanique extérieure, en particulier de toute contrainte exercée sur ses éléments de fixation.

## Revendications

1. Microsystème électromécanique (MEMS) comprenant:
une partie active (5) électromécanique, ladite partie active (5) comprenant un cadre (29) et une masse d'inertie (28), la masse d'inertie étant reliée audit cadre par au moins une zone flexible (290) permettant à la masse d'inertie de se déplacer le long d'au moins un axe de mesure (Z) en induisant des variations d'une grandeur électrique,
au moins un socle (6) pour la fixation dudit microsystème sur un support (8),
au moins une attache (21, 21') élastique attachant ladite partie active (5) audit au moins un socle (6) et permettant un déplacement de ladite partie active (5) relativement audit au moins un socle (6) lorsque ledit microsystème est fixé sur ledit support (8),
**caractérisé par**
des éléments de butée (27, 27', 37') pour limiter l'amplitude des déplacements de ladite partie active (5) relativement audit au moins un socle (6)

2. Microsystème selon la revendication 1, dans lequel lesdits éléments de butée sont agencés pour limiter l'amplitude des déplacements de ladite partie active (5) relativement audit au moins un socle (6) le long dudit axe de mesure (Z).

3. Microsystème selon la revendication précédente, ledit microsystème étant un accéléromètre.

4. Microsystème selon l'une des revendications précédentes, ladite au moins une attache (21, 21') permettant un déplacement de ladite partie active (5) relativement audit au moins un socle (6) le long d'un axe (X, Y) perpendiculaire à l'axe de mesure lorsque ledit microsystème est fixé sur ledit support (8), ledit microsystème comprenant des éléments de butée (37, 27, 37') pour limiter l'amplitude des déplacements de ladite partie active (5) relativement audit au moins un socle (6) le long dudit axe perpendiculaire (X, Y).

5. Microsystème selon l'une des revendications 1 à 3, ladite au moins une attache (21, 21') permettant des déplacements de ladite partie active (5) relativement audit au moins un socle (6) le long de deux axes (X, Y) linéairement indépendants et sensiblement perpendiculaires à l'axe de mesure (Z), ledit microsystème comprenant des éléments de butée (27, 37, 37') pour limiter l'amplitude des déplacements de ladite partie active (5) relativement audit au moins un socle (6) le long desdits deux axes perpendiculaires (X, Y).

6. Microsystème selon l'une des revendications précédentes, ladite au moins une attache (21, 21') permettant une rotation de ladite partie active (5) relativement audit au moins un socle (6) autour dudit axe de mesure (Z), ledit microsystème comprenant des éléments de butée (27, 37, 27', 37') pour limiter l'amplitude des rotations de ladite partie active (5) relativement audit au moins un socle (6) autour dudit axe de mesure (Z).

7. Microsystème selon l'une des revendications précédentes, ladite au moins une attache (21, 21') permettant une rotation de ladite partie active (5) relativement audit au moins un socle (6) autour d'un axe (X, Y) sensiblement perpendiculaires à l'axe de mesure (Z), ledit microsystème comprenant des éléments de butée (27, 27', 37') pour limiter l'amplitude des rotations de ladite partie active (5) relativement audit au moins un socle (6) autour dudit axe perpendiculaire (X, Y).

8. Microsystème selon l'une des revendications 1 à 6, ladite au moins une attache (21, 21') permettant des rotations de ladite partie active (5) relativement audit au moins un socle (6) autour de deux axes (X, Y) linéairement indépendants et sensiblement perpendiculaires à l'axe de mesure (Z), ledit microsystème comprenant des éléments de butée (27, 27', 37') pour limiter l'amplitude des rotations de ladite partie active (5) relativement audit au moins un socle (6) autour desdits deux axes perpendiculaires (X, Y).

9. Microsystème selon l'une des revendications précédentes, ladite partie active (5) étant suspendue audit au moins un socle (6) par ladite au moins une attache (21, 21') lorsque ledit au moins un socle (6) est fixé sur ledit support (8).

10. Microsystème selon l'une des revendications précédentes, ladite au moins une attache (21, 21') étant élastique, lesdits éléments de butée (27, 37, 27', 37') limitant l'amplitude des mouvements de ladite partie active (5) par rapport audit au moins un socle (6) à l'intérieur du domaine d'élasticité de ladite au moins une attache (21, 21').

11. Microsystème selon la revendication précédente, l'élasticité de ladite au moins une attache (21, 21') étant différente suivant les directions.

12. Microsystème selon la revendication précédente, l'élasticité de ladite au moins une attache (21, 21') étant maximale le long d'un axe (X) sensiblement perpendiculaire à l'axe de mesure et minimale le long de l'axe de mesure (Z).

13. Microsystème selon l'une des revendications précédentes, lesdits éléments de butée comprenant au moins une butée (37) formée sur ladite partie active (5) et collaborant avec ledit au moins un socle (6) pour limiter l'amplitude des déplacements de ladite partie active (5) relativement audit au moins un socle (6) le long d'un axe (X) sensiblement perpendiculaire à l'axe de mesure.

14. Microsystème selon la revendication précédente, ladite butée (37) étant constituée d'une partie saillante sur une face de ladite partie active (5) vis-à-vis dudit au moins un socle (6), la longueur de ladite butée (37) étant sensiblement plus courte que la longueur de ladite face.

15. Microsystème selon l'une des revendications précédentes, lesdits éléments de butée comprenant au moins une butée (37') formée sur ledit au moins un socle (6) et collaborant avec ladite partie active (5) pour limiter l'amplitude des déplacements de ladite partie active (5) relativement audit au moins un socle (6) le long d'un axe (X) sensiblement perpendiculaire à l'axe de mesure.

16. Microsystème selon l'une des revendications précédentes, lesdits éléments de butée comprenant au moins un élément mécanique rigide (27, 27') solidaire de ladite partie active (5) et coopérant avec ledit au moins un socle (6) pour limiter l'amplitude des déplacements de ladite partie active (5) relativement audit au moins un socle (6) le long de l'axe de mesure (Z).

17. Microsystème selon la revendication précédente, ledit au moins un élément mécanique rigide étant une poutre (27, 27') coopérant avec une cavité formée dans ledit au moins un socle (6).

18. Microsystème selon l'une des revendications précédentes, lesdits éléments de butée comprenant au moins un élément mécanique rigide solidaire dudit au moins un socle (6) et coopérant avec ladite partie active (5) pour limiter l'amplitude des déplacements de ladite partie active (5) relativement audit au moins un socle (6) le long de l'axe de mesure (Z).

19. Microsystème selon la revendication précédente, ledit au moins un élément mécanique rigide étant une poutre coopérant avec une cavité formée dans ladite partie active (5).

20. Microsystème selon l'une des revendications 16 à 17, ledit au moins un élément mécanique rigide (27) limitant en outre l'amplitude des déplacements de ladite partie active (5) relativement audit au moins un socle (6) le long d'un axe (Y) sensiblement perpendiculaire à l'axe de mesure.

21. Microsystème selon l'une des revendications 16 à 20, ledit au moins un élément mécanique rigide (27, 27') limitant en outre l'amplitude des rotations de ladite partie active (5) relativement audit au moins un socle (6) autour d'un axe (Y) sensiblement perpendiculaire à l'axe de mesure.

22. Microsystème selon l'une des revendications 16 à 20, ledit au moins un élément mécanique rigide (27, 27') limitant en outre l'amplitude des rotations de ladite partie active (5) relativement audit au moins un socle (6) autour de deux axes (X, Y) linéairement indépendants et sensiblement perpendiculaires à l'axe de mesure.

23. Microsystème selon l'une des revendications 16 à 22, ledit au moins un élément mécanique rigide (27) limitant en outre l'amplitude des rotations de ladite partie active (5) relativement audit au moins un socle (6) autour de l'axe de mesure (Z).

24. Microsystème selon l'une des revendications précédentes comprenant au moins trois couches (1, 2, 3) de matériau semiconducteur superposées, lesdites au moins trois couches comprenant une couche inférieure (1), une couche intermédiaire (2) et une couche supérieure (3).

25. Microsystème selon la revendication précédente, ladite couche intermédiaire (2) étant formée et structurée sur ladite couche inférieure (1) ou sur ladite couche supérieure (3).

26. Microsystème selon la revendication précédente, ladite couche intermédiaire (2) étant formée par déposition de matériau semiconducteur sur une surface isolante formée sur ladite couche inférieure (1) ou sur ladite couche supérieure (3) (technologie SOI, Silicon on Insulator).

27. Microsystème selon l'une des revendications 24 à 26, ladite au moins une attache (21, 21') étant formée par structuration de ladite couche intermédiaire (2).

28. Microsystème selon l'une des revendications 24 à 27, au moins un élément de butée (27, 27') desdits éléments de butée étant formé par structuration de ladite couche intermédiaire (2).

29. Microsystème selon la revendication précédente, ledit au moins un élément de butée étant une poutre (27) solidaire de ladite partie active (5) et s'étendant jusqu'audit au moins un socle (6).

30. Microsystème selon la revendication 28, ledit au moins un élément de butée étant une poutre solidaire dudit au moins un socle (6) et s'étendant jusqu'à ladite partie active (5).

31. Microsystème selon l'une des revendications 29 ou 30, ladite poutre (27) étant au moins partiellement logée dans une cavité formée par structuration de ladite couche intermédiaire (2) autour de ladite poutre (27), le périmètre de ladite cavité étant fermé par ladite couche inférieure (1) et par ladite couche supérieure (3).

32. Microsystème selon l'une des revendications précédentes, comprenant deux socles (6) disposés de part et d'autre de ladite partie active (5), ladite partie active (5) étant attachée audit au moins un socle (6) par quatre attaches (21).

33. Dispositif comprenant un microsystème selon l'une des revendications précédentes et un support (8), ledit microsystème étant fixé sur ledit support (8).

34. Dispositif selon la revendication précédente, ledit support (8) comprenant en outre un circuit électronique pour la gestion de ladite partie active (5).

35. Dispositif selon la revendication précédente, ledit microsystème étant un accéléromètre, ledit dispositif électromécanique comprenant une masse d'inertie (28) dont les déplacements le long d'au moins un axe de mesure induisent des variations d'une grandeur électrique, ledit circuit électronique permettant l'interprétation desdites variations.

36. Dispositif selon l'une des revendications 24 à 35, un casque étant fixé sur ledit support (8) autour dudit microsystème pour limiter l'amplitude des déplacements de ladite partie active.

## Claims

1. Microelectromechanical system (MEMS) having:
an electromechanical active part (5), said active part (5) having a frame (29) and a centrifugal mass (28), the centrifugal mass being connected to said frame through at least one flexible zone (290) allowing the centrifugal mass to move along at least one measuring axis (Z) and causing variations of an electrical value,
at least one base (6) for fastening said microsystem on a support (8),
at least one elastic fastener (21, 21') fastening said active part (5) to said at least one base (6) and allowing a displacement of said active part (5) relatively to said at least one base (6) when said microsystem is fastened onto said support (8),
**characterized by**
bumper elements (27, 27', 37') for limiting the amplitude of the displacements of said active part (5) relatively to said at least one base (6).

2. Microsystem according to the claim 1, wherein said bumper elements are arranged for limiting the amplitude of the displacements of said active part (5) relatively to said at least one base (6) along said perpendicular axis (Z).

3. Microsystem according to the preceding claim, said microsystem being an accelerometer.

4. Microsystem according to one of the preceding claims, said at least one fastener (21, 21') allowing a displacement of said active part (5) relatively to said at least one base (6) along an axis (X, Y) perpendicular to the measuring axis when said microsystem is fastened onto said support (8), said microsystem having bumper elements (37, 27, 37') for limiting the amplitude of the displacements of said active part (5) relatively to said at least one base (6) along said perpendicular axis (X, Y).

5. Microsystem according to one of the claims 1 to 3, said at least one fastener (21, 21') allowing displacements of said active part (5) relatively to said at least one base (6) along two axes (X, Y) linearly independent and perceptibly perpendicular to the measuring axis (Z), said microsystem having bumper elements (27, 37, 37') for limiting the amplitude of the displacements of said active part (5) relatively to said at least one base (6) along said two perpendicular axes (X, Y).

6. Microsystem according to one of the preceding claims, said at least one fastener (21, 21') allowing a rotation of said active part (5) relatively to said at least one base (6) around said measuring axis (Z), said microsystem having bumper elements (27, 37, 27', 37') for limiting the amplitude of the rotations of said active part (5) relatively to said at least one base (6) around said measuring axis (Z).

7. Microsystem according to one of the preceding claims, said at least one fastener (21, 21') allowing a rotation of said active part (5) relatively to said at least one base (6) around an axis (X, Y) perceptibly perpendicular to the measuring axis (Z), said microsystem having bumper elements (27, 27', 37') for limiting the amplitude of the rotations of said active part (5) relatively to said at least one base (6) around said perpendicular axis (X, Y).

8. Microsystem according to one of the claims 1 to 6, said at least one fastener (21, 21') allowing rotations of said active part (5) relatively to said at least one base (6) around two axes (X, Y) linearly independent and perceptibly perpendicular to the measuring axis (Z), said microsystem having bumper elements (27, 27', 37') for limiting the amplitude of the rotations of said active part (5) relatively to said at least one base (6) around said two perpendicular axes (X, Y).

9. Microsystem according to one of the preceding claims, said active part (5) being suspended to said at least one base (6) by said at least one fastener (21, 21') when said at least one base (6) is fastened onto said support (8).

10. Microsystem according to one of the preceding claims, said at least one fastener (21, 21') being elastic, said bumper elements (27, 37, 27', 37') limiting the amplitude of the movements of said active part (5) relatively to said at least one base (6) inside the elasticity range of said at least one fastener (21, 21').

11. Microsystem according to the preceding claim, the elasticity of said at least one fastener (21, 21') being different according to the directions.

12. Microsystem according to the preceding claim, the elasticity of said at least one fastener (21, 21') being maximal along an axis (X) perceptibly perpendicular to the measuring axis and minimal along the measuring axis (Z).

13. Microsystem according to one of the preceding claims, said bumper elements having at least one bumper (37) formed on said active part (5) and working with said at least one base (6) for limiting the amplitude of the displacements of said active part (5) relatively to said at least one base (6) along an axis (X) perceptibly perpendicular to the measuring axis.

14. Microsystem according to the preceding claim, said bumper (37) being constituted of a protruding part on a side of said active part (5) opposite said at least one base (6), the length of said bumper (37) being perceptibly shorter than the length of said side.

15. Microsystem according to one of the preceding claims, said bumper elements having at least one bumper (37') formed on said at least one base (6) and working with said active part (5) for limiting the amplitude of the displacements of said active part (5) relatively to said at least one base (6) along an axis (X) perceptibly perpendicular to the measuring axis.

16. Microsystem according to one of the preceding claims, said bumper elements having at least one rigid mechanical element (27, 27') fixedly united with said active part (5) and working with said at least one base (6) for limiting the amplitude of the displacements of said active part (5) relatively to said at least one base (6) along the measuring axis (Z).

17. Microsystem according to the preceding claim, said at least one rigid mechanical element being a beam (27, 27') working with a recess formed in said at least one base (6).

18. Microsystem according to one of the preceding claims, said bumper elements having at least one rigid mechanical element fixedly united with said at least one base (6) and working with said active part (5) for limiting the amplitude of the displacements of said active part (5) relatively to said at least one base (6) along the measuring axis (Z).

19. Microsystem according to the preceding claim, said at least one rigid mechanical element being a beam working with a recess formed in said active part (5).

20. Microsystem according to one of the claims 16 to 17, said at least one rigid mechanical element (27) further limiting the amplitude of the displacements of said active part (5) relatively to said at least one base (6) along an axis (Y) perceptibly perpendicular to the measuring axis.

21. Microsystem according to one of the claims 16 to 20, said at least one rigid mechanical element (27, 27') further limiting the amplitude of the rotations of said active part (5) relatively to said at least one base (6) around an axis (Y) perceptibly perpendicular to the measuring axis.

22. Microsystem according to one of the claims 16 to 22, said at least one rigid mechanical element (27) further limiting the amplitude of the rotations of said active part (5) relatively to said at least one base (6) around the measuring axis (Z).

23. Microsystem according to one of the claims 16 to 22, said at least one rigid mechanical element (27) further limiting the amplitude of the rotations of said active part (5) relatively to said at least one base (6) around the measuring axis (Z).

24. Microsystem according to one of the preceding claims, having at least three superimposed layers (1, 2, 3) of conducting material, said at least three layers having a lower layer (1), an middle layer (2) and an upper layer (3).

25. Microsystem according to the preceding claim, said middle layer (2) being formed and structured on said lower layer (1) or on said upper layer (3).

26. Microsystem according to the preceding claim, said middle layer (2) being formed by depositing semiconductor material onto an isolating surface formed on said lower layer (1) or on said upper layer (3) (SOl, Silicon on Insulator technology).

27. Microsystem according to one of the claims 24 to 26, said at least one fastener (21, 21') being formed by structuring said middle layer (2).

28. Microsystem according to one of the claims 24 to 27, at least one bumper element (27, 27') of said bumper elements being formed by structuring said middle layer (2).

29. Microsystem according to the preceding claim, said at least one bumper element being a beam (27) fixedly united with said active part (5) and extending until said at least one base (6).

30. Microsystem according to claim 28, said at least one bumper element being a beam fixedly united with said at least one base (6) and extending until said active part (5).

31. Microsystem according to one of the claims 29 or 30, said beam (27) being at least partially lodged in a recess formed by structuring said middle layer (2) around said beam (27), the perimeter of said recess being closed by said lower layer (1) and by said upper layer (3).

32. Microsystem according to one of the preceding claims, having two bases (6) arranged on either side of said active part (5), said active part (5) being fastened to said at least one base (6) by four fasteners (21).

33. Device comprising a microsystem according to one of the preceding claims and a support (8), said microsystem being fastened onto said support (8).

34. Device according to the preceding claim, said support (8) further comprising an electronic circuit for controlling said active part (5).

35. Device according to the preceding claim, said microsystem being an accelerometer, said electromechanical device having a centrifugal mass (28) whose displacements along at least one measuring axis cause variations of an electric value, said electronic circuit allowing said variations to be interpreted.

36. Device according to one of the claims 24 to 35, a hood being fastened onto said support (8) around said microsystem for limiting the amplitude of the displacements of said active part.

## Patentansprüche

1. Mikroelektromechanisches System (MEMS) mit:
einem aktiven elektromechanischen Teil (5), wobei der besagte aktive Teil (5) ein Gestell (29) und eine Schwungmasse (28) umfasst, wobei die Schwungmasse mit dem besagten Gestell durch mindestens eine flexible Zone (290) verbunden ist, welche der Schwungmasse erlaubt, sich entlang mindestens einer Messachse (Z) zu bewegen, indem Variationen einer elektrischen Grösse induziert werden,
mindestens einem Sockel (6) für die Befestigung des besagten Mikrosystems auf einer Unterlage (8),
mindestens einer elastischen Befestigung (21, 21'), welche den besagten aktiven Teil (5) mit dem mindestens einem Sockel (6) verbindet und eine Bewegung des besagten aktiven Teils (5) in Bezug auf den besagten mindestens einen Sockel (6) erlaubt, wenn das besagte Mikrosystem auf der besagten Unterlage befestigt ist,
**gekennzeichnet durch**
Anschlagelemente (27, 27', 37'), um die Amplitude der Bewegungen des aktiven Teils (5) in Bezug auf den besagten mindestens einen Sockel (6) einzuschränken.

2. Mikrosystem gemäss Anspruch 1, worin die besagten Anschlagelemente so angeordnet sind, um die Amplitude der Bewegungen des besagten aktiven Teils (5) in Bezug auf den besagten mindestens einen Sockel (6) entlang der besagten Messachse (Z) einzuschränken.

3. Mikrosystem gemäss dem vorhergehenden Anspruch, wobei das besagte Mikrosystem ein Beschleunigungsmesser ist.

4. Mikrosystem gemäss einem der vorhergehenden Ansprüche, wobei die besagte mindestens eine Befestigung (21, 21') eine Bewegung des besagten aktiven Teils (5) in Bezug auf den besagten mindestens einen Sockel (6) entlang einer zur Messachse senkrechte Achse (X, Y) ermöglicht, wenn das besagte Mikrosystem auf der besagten Unterlage (8) befestigt ist, wobei das besagte Mikrosystem Anschlagelemente (37, 27, 37') umfasst, um die Amplitude der Bewegungen des besagten aktiven Teils (5) in Bezug auf den besagten mindestens einen Sockel (6) entlang der besagten senkrechten Achse (X, Y) einzuschränken.

5. Mikrosystem gemäss einem der Ansprüche 1 bis 3, wobei die besagte mindestens eine Befestigung (21, 21') Bewegungen des besagten aktiven Teils (5) in Bezug auf den besagten mindestens einen Sockel (6) entlang zwei linear unabhängigen und zur Messachse (Z) deutlich senkrechte Achsen (X, Y) ermöglicht, wobei das besagte Mikrosystem Anschlagelemente (27, 27', 37') umfasst, um die Amplitude der Bewegungen des besagten aktiven Teils (5) in Bezug auf den besagten mindestens einen Sockel (6) entlang der besagten beiden senkrechten Achsen (X, Y) einzuschränken.

6. Mikrosystem gemäss einem der vorhergehenden Ansprüche, wobei die besagte mindestens eine Befestigung (21, 21') eine Drehung des besagten aktiven Teils (5) in Bezug auf den besagten mindestens einen Sockel (6) um die besagte Messachse (Z) ermöglicht, wobei das besagte Mikrosystem Anschlagelemente (27, 37, 27', 37') umfasst, um die Amplitude der Drehungen des besagten aktiven Teils (5) in Bezug auf den besagten mindestens einen Sockel (6) um die besagte Messachse (Z) einzuschränken.

7. Mikrosystem gemäss einem der vorhergehenden Ansprüche, wobei die besagte mindestens eine Befestigung (21, 21') eine Drehung des besagten aktiven Teils (5) in Bezug auf den besagten mindestens einen Sockel (6) um eine zur Messachse (Z) deutlich senkrechte Achse (X, Y) ermöglicht, wobei das besagte Mikrosystem Anschlagelemente (27, 27', 37') umfasst, um die Amplitude der Drehungen des besagten aktiven Teils (5) in Bezug auf den besagten mindestens einen Sockel (6) um die besagte senkrechte Achse (X, Y) einzuschränken.

8. Mikrosystem gemäss einem der Ansprüche 1 bis 6, wobei die besagte mindestens eine Befestigung (21, 21') Drehungen des besagten aktiven Teils (5) in Bezug auf den besagten mindestens einen Sockel (6) um zwei linear unabhängige und zur Messachse (Z) deutlich senkrechte Achsen (X, Y) ermöglicht, wobei das besagte Mikrosystem Anschlagelemente (27, 27', 37') umfasst, um die Amplitude der Drehungen des besagten aktiven Teils (5) in Bezug auf den besagten mindestens einen Sockel (6) um die besagten beiden senkrechten Achsen (X, Y) einzuschränken.

9. Mikrosystem gemäss einem der vorhergehenden Ansprüche, wobei der besagte aktive Teil (5) vom besagten mindestens einem Sockel (6) durch die besagte mindestens eine Befestigung (21, 21') hängt, wenn der besagte mindestens ein Sockel (6) auf der besagten Unterlage (8) befestigt ist.

10. Mikrosystem gemäss einem der vorhergehenden Ansprüche, wobei die besagte mindestens eine Befestigung (21, 21') elastisch ist, wobei die besagten Anschlagelemente (27, 37, 27', 37') die Amplitude der Bewegungen des besagten aktiven Teils (5) in Bezug auf den besagten mindestens einen Sockel (6) innerhalb des Elastizitätsbereichs der besagten mindestens einen Befestigung (21, 21') einschränken.

11. Mikrosystem gemäss dem vorhergehenden Anspruch, wobei die Elastizität der besagten mindestens einen Befestigung (21, 21') je nach Richtung unterschiedlich ist.

12. Mikrosystem gemäss dem vorhergehenden Anspruch, wobei die Elastizität der besagten mindestens einen Befestigung (21, 21') entlang der zur Messachse deutlich senkrechten Achse (X) maximal und entlang der Messachse (Z) minimal ist.

13. Mikrosystem gemäss einem der vorhergehenden Ansprüche, wobei die besagten Anschlagelemente mindestens einen Anschlag (37) aufweisen, der auf dem besagten aktiven Teil (5) geformt ist und mit dem mindestens einen Sockel (6) zusammenarbeitet, um die Amplitude der Bewegungen des besagten aktiven Teils (5) in Bezug auf den mindestens einen Sockel (6) entlang einer zur Messachse deutlich senkrechten Achse (X) einzuschränken.

14. Mikrosystem gemäss dem vorhergehenden Anspruch, wobei der besagte Anschlag (37) aus einem herausragenden Teil auf einer Seite des besagten aktiven Teils (5) gegenüber dem besagten mindestens einen Sockel (6) besteht, wobei die Länge des besagten Anschlags (37) deutlich kürzer als die Länge der besagten Seite ist.

15. Mikrosystem gemäss einem der vorhergehenden Ansprüche, wobei die besagten Anschlagelemente mindestens einen Anschlag (37') aufweisen, der auf dem besagtem mindestens einem Sockel (6) geformt ist und mit dem besagten aktiven Teil (5) zusammenarbeitet, um die Amplitude der Bewegungen des besagten aktiven Teils (5) in Bezug auf den mindestens einen Sockel (6) entlang einer zur Messachse deutlich senkrechten Achse (X) einzuschränken.

16. Mikrosystem gemäss einem der vorhergehenden Ansprüche, wobei die besagten Anschlagelemente mindestens ein starres mechanisches Element (27, 27') aufweisen, das mit dem besagten aktiven Teil (5) solidarisch verbunden ist und mit dem besagten mindestens einem Sockel (6) zusammenarbeitet, um die Amplitude der Bewegungen des besagten aktiven Teils (5) in Bezug auf den mindestens einen Sockel (6) entlang der Messachse (Z) einzuschränken.

17. Mikrosystem gemäss dem vorhergehenden Anspruch, wobei das mindestens eine starre mechanische Element ein Balken (27, 27') ist, welcher mit einer im besagten mindestens einem Sockel (6) geformten Aushöhlung zusammenarbeitet.

18. Mikrosystem gemäss einem der vorhergehenden Ansprüche, wobei die besagten Anschlagelemente mindestens ein starres mechanisches Element umfassen, das mit dem mindestens einen Sockel (6) solidarisch verbunden ist und mit dem besagten aktiven Teil (5) zusammenarbeitet, um die Amplitude der Bewegungen des besagten aktiven Teils (5) in Bezug auf den mindestens einen Sockel (6) entlang der Messachse (Z) einzuschränken.

19. Mikrosystem gemäss dem vorhergehenden Anspruch, wobei das mindestens eine starre mechanische Element ein Balken ist, welcher mit einer im besagten aktiven Teil (5) geformten Aushöhlung zusammenarbeitet.

20. Mikrosystem gemäss einem der Ansprüche 16 bis 17, wobei das besagte mindestens eine starre mechanische Element (27) zudem die Amplitude der Drehungen des besagten aktiven Teils (5) in Bezug auf den besagten mindestens einen Sockel (6) um eine zur Messachse deutlich senkrechte Achse (Y) einschränkt.

21. Mikrosystem gemäss einem der Ansprüche 16 bis 20, wobei das besagte mindestens eine starre mechanische Element (27, 27') zudem die Amplitude der Drehungen des besagten aktiven Teils (5) in Bezug auf den besagten mindestens einen Sockel (6) um eine zur Messachse deutlich senkrechte Achse (Y) einschränkt.

22. Mikrosystem gemäss einem der Ansprüche 16 bis 20, wobei das besagte mindestens eine starre mechanische Element (27, 27') zudem die Amplitude der Drehungen des besagten aktiven Teils (5) in Bezug auf den besagten mindestens einen Sockel (6) um zwei linear unabhängige und zur Messachse deutlich senkrechte Achsen (X, Y) einschränkt.

23. Mikrosystem gemäss einem der Ansprüche 16 bis 22, wobei das besagte mindestens eine starre mechanische Element (27) zudem die Amplitude der Drehungen des besagten aktiven Teils (5) in Bezug auf den besagten mindestens einen Sockel (6) um die Messachse (Z) einschränkt.

24. Mikrosystem gemäss einem der vorhergehenden Ansprüche, mit mindestens drei übereinander liegenden Schichten (1, 2, 3) aus Halbleitermaterial, wobei die besagten mindestens drei Schichten eine untere Schicht (1), eine Zwischenschicht (2) und eine obere Schicht (3) umfassen.

25. Mikrosystem gemäss dem vorhergehenden Anspruch, wobei die besagte Zwischenschicht (2) auf die besagte untere Schicht (1) oder auf die besagte obere Schicht (3) geformt und strukturiert wird.

26. Mikrosystem gemäss dem vorhergehenden Anspruch, wobei die besagte Zwischenschicht (2) durch Ablagerung von Halbleitermaterial auf eine auf der besagten unteren Schicht (1) oder auf der besagten oberen Schicht (3) geformten isolierenden Oberfläche geformt wird (SOI-Technologie, Silicon on Insulator).

27. Mikrosystem gemäss einem der Ansprüche 24 bis 26, wobei die besagte mindestens eine Befestigung (21, 21') durch Strukturierung der besagten Zwischenschicht (2) geformt wird.

28. Mikrosystem gemäss einem der Ansprüche 24 bis 27, wobei mindestens ein Anschlagelement (27, 27') der besagten Anschlagelemente durch Strukturierung der besagten Zwischenschicht (2) geformt wird.

29. Mikrosystem gemäss dem vorhergehenden Anspruch, wobei das mindestens eine Anschlagelement ein Balken (27) ist, welcher mit dem besagten aktiven Teil (5) solidarisch verbunden ist und sich bis zum besagten mindestens einen Sockel (6) erstreckt.

30. Mikrosystem gemäss Anspruch 28, wobei das mindestens eine Anschlagelement ein Balken ist, welcher mit dem besagten mindestens einen Sockel (6) solidarisch verbunden ist und sich bis zum besagten aktiven Teil (5) erstreckt.

31. Mikrosystem gemäss einem der Ansprüche 29 oder 30, wobei der besagte Balken (27) mindestens teilweise in einer durch Strukturierung der besagten Zwischenschicht (2) um den besagten Balken (27) geformten Aushöhlung untergebracht wird, wobei der Umfang der besagten Aushöhlung durch die besagte untere Schicht (1) und durch die besagte obere Schicht (3) geschlossen ist.

32. Mikrosystem gemäss einem der vorhergehenden Ansprüche, mit zwei Sockeln (6), welche auf beiden Seiten des besagten aktiven Teils (5) angeordnet sind, wobei der besagte aktive Teil (5) an den mindestens einen Sockel (6) durch vier Befestigungen (21) befestigt wird.

33. Vorrichtung mit einem Mikrosystem gemäss einem der vorhergehenden Ansprüche und einer Unterlage (8), wobei das Mikrosystem auf der besagten Unterlage (8) befestigt ist.

34. Vorrichtung gemäss dem vorhergehenden Anspruch, wobei die besagte Unterlage (8) zudem einen elektronischen Schaltkreis für die Steuerung des besagten aktiven Teils (5) aufweist.

35. Vorrichtung gemäss dem vorhergehenden Anspruch, wobei das besagte Mikrosystem ein Beschleunigungsmesser ist, wobei die elektromechanische Vorrichtung eine Schwungmasse (28) umfasst, deren Bewegungen entlang mindestens einer Messachse Variationen einer elektrischen Grösse induzieren, wobei der besagte elektronische Schaltkreis die Interpretation der besagten Variationen ermöglicht.

36. Vorrichtung gemäss einem der Ansprüche 24 bis 35, wobei ein Helm auf die besagte Unterlage (8) um das besagte Mikrosystem angebracht wird, um die Amplitude der Bewegungen des besagten aktiven Teils einzuschränken.
